# EUROPEAN PATENT SPECIFICATION

(11) **EP 1 363 221 B1**
(45) Date of publication and mention of the grant of the patent: **05.12.2007**
(21) Application number: 03010615.7
(22) Date of filing: 12.05.2003
(51) Int. Cl.: G06Q 10/00, H04L 12/54

(54) **Increasing the level of automation when scheduling and managing meetings**
Erhöhung des Niveaus der Automatisierung, wenn Sitzungen festgelegt und gehandhabt werden
Augmentation du niveau de l'automation en prévoyant et en contrôlant des réunions

(30) Priority: 14.05.2002 US 144921
(43) Date of publication of application: 19.11.2003
(73) Proprietor: MICROSOFT CORPORATION, Redmond, WA 98052 (US)
(72) Inventor: Walther, Daniel Edward, Redmond, WA 98053 (US); Masterson, Joseph Patrick, Renton, WA 98056 (US)
(74) Representative: Grünecker, Kinkeldey, Stockmair & Schwanhäusser Anwaltssozietät

(56) References cited:
- JP-A- 10 149 498
- US-A- 5 790 974

## Description

### BACKGROUND OF THE INVENTION

### 1. The Field of the Invention

The present invention relates to scheduling and managing meetings. More specifically, the present invention relates to systems, methods, and computer program products for increasing the level of automation when using electronic data to schedule meetings and notify meeting attendants of relevant information associated with currently-scheduled meetings.

### 2. Background and Related Art

Computer systems are often coupled to one another through networks that allow the computer systems to exchange data electronically. This is beneficial, as transporting data electronically is often much faster than transporting data using other methods. The electronic transfer of data has significantly reduced the effort required to schedule a meeting. Typically, scheduling applications store electronic data indicating when individuals are free and when they are busy ("free/busy time"). In many cases, an individual meeting organizer views the free/busy time for potential meeting participants and attempts to identify an appropriate meeting time based on the collective free/busy times of all potential meeting participants. That is, the individual meeting organizer uses the electronic data to attempt to identify a period of time where all potential meeting participants have free time.

However, current scheduling applications that utilize electronic data to aid in scheduling meetings have certain drawbacks. As the number of potential meeting participants increases, it is often difficult, if not impossible, to simultaneously view free/busy time for all potential meeting participants. Simultaneously viewing free/busy time may be especially problematic on mobile computer systems, which often include display devices with a reduced viewing area.

Another drawback is that conventional scheduling applications fail to consider data in addition to free/busy time when scheduling a meeting. Factors such as location, traffic, and weather may restrain a potential meeting participant's attendance at a meeting, even if the potential participant otherwise has free time. For example, if a potential meeting participant will take thirty minutes to get to a meeting, this potential participant may need to be available at 1:30 PM in order to schedule a 2:00 PM meeting. When scheduling a meeting, an individual meeting organizer may be burdened with determining this data for each potential meeting participant.

Other problems may occur if information relevant to a scheduled meeting changes. Conventional scheduling applications lack the management capabilities to notify meeting participants if information relevant to a scheduled meeting changes. For example, if a participant's availability for a scheduled meeting changes, especially during a critical time period immediately preceding the meeting, other meeting participants may not be notified. This may result in meeting participants wasting time, or if the meeting was scheduled for only two people may destroy the benefit of the meeting altogether.

Therefore, what are desired are systems, methods, and computer program products, for increasing the level of automation when scheduling meetings and when providing relevant information to participants.
US 5,790,974 relates to a personal calendaring system including a portable calendaring system and a complementary office calendar system, each synchronizing calendar entries by a two-way wireless transmission.
A portable calendaring system Includes a GPS receiver interface providing location data. If a conflict is generated between the stored schedule and a schedule request the agent of the personal calendaring system arbitrate resolution of the generated conflict. The perceptual agents also update schedule travel times an associated reminder alarms in response to detected changes in traffic for the location of the portable calendaring system and advise the user if a scheduled conflict arises due to the updated travel time.

### SUMMARY OF THE INVENTION

It is often desirable to schedule meetings based on electronic data gathered from a variety of locations. Such electronic data may be gathered from scheduling databases, global positioning system ("GPS") databases, meeting attendant's personal databases, mapping databases, word processing documents, or the like. In accordance with the principles of the present invention, the level of automation is increased when scheduling meetings based on electronic data. It is also often desirable to provide relevant information for a currently-scheduled meeting to the meeting attendants. Such information may be in the form of electronic data gathered from the previous described locations. Likewise, in accordance with the principles of the present invention, relevant information for currently-scheduled meetings is provided to meeting attendants.

Some embodiments of the present invention may be practiced to schedule meetings for a user. When scheduling a meeting, it is first determined that a meeting is to be scheduled among a number of meeting attendants. It may be determined that a meeting is to be scheduled as a result of a user manually entering data into a scheduling computer system. Such entered data may indicate that a meeting is to be scheduled at a particular date, time, and/or location. In some embodiments, the scheduling computer system may automatically determine a meeting is to be scheduled. Meeting attendants may be selected from a list of possible meeting attendants that are stored in databases, for example, a contacts or calendar database. In some embodiments, a user may manually enter meeting attendants.

Information relevant to the availability of at least some of the number of meeting attendants is accessed. Relevant information for each potential attendant may include data indicating when an attendant is free and when they are busy ("free/busy time"), the location of an attendant, a priority level for an attendant, and whether or not an attendant is a required or optional attendant. Such relevant information may be accessed from different locations. For example, free/busy time may be accessed from calendar application and location information accessed from a GPS database.

Based on the relevant information, at least one potential meeting is automatically determined. Relevant information may be analyzed to determine a meeting time that satisfies predetermined criteria. Such predetermined criteria may include, for example, that a specified percentage of meeting attendants be available at a specified time, that all required attendants be available, that meeting attendants be available to attend in a specified location, etc. Analysis of relevant information may be performed by decision logic included in the scheduling computer system. After determining potential meeting times, the scheduling computer system may present a list of meetings to an output device.

In some embodiments of the present invention, the level of automation is increased when managing meetings for a user. More specifically, a currently-scheduled meeting that has a number of attendants is identified. A currently-scheduled meeting may be identified in response to data received at an input device, such as, for example, a keyboard. Likewise, a managing computer system may be configured to automatically identify a currently-scheduled meeting. After a currently-scheduled meeting is identified, relevant information associated with the currently-scheduled meeting is also identified. The managing computer system may refer to or search external databases and/or external file systems to identify relevant information. Identifying a meeting and relevant information may include identifying the time, date, location, and/or subject matter of the meeting, the estimated time of arrival, current location, and/or contact information for a specific meeting attendant, and/or documents related to the meeting.

Identified information is automatically accessed and automatically made available to at least one of the meeting attendants. This may include the managing computer system accessing the information from external databases and/or external file systems that were previously referred to or searched. The managing computer system may make relevant information available to a meeting attendant by sending an electronic message to a computer system associated with the meeting attendant. It may be that relevant information changes as result of a change in the availability of a meeting attendant or meeting location. For example, if a meeting attendant will be late to a meeting due to traffic congestion, other meeting attendants may be notified of the delay. The managing computer system may detect such changes and automatically suggest options for rescheduling meetings or automatically rescheduling meetings without input from meeting participants.

Increasing the level of automation when scheduling meetings reduces the amount of data that is interpreted by an individual meeting organizer. This promotes efficient scheduling of meetings and reduces the chance of human error in the scheduling process. Automatically accessing and providing relevant information to meeting attendants centralizes the distribution of such information. This promotes time efficiency by relieving individual meeting attendants from having to actively seek out the information. In a mobile environment, increased automation may provide certain safety benefits as well. For example, automatically updating the status of a meeting attendant, who is late due to traffic congestion, may free the meeting attendant from having to manually manipulate a mobile computer system. Thus, the meeting attendant may devote more attention to safe operation of their vehicle.

Additional features and advantages of the invention will be set forth in the description that follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order to describe the manner in which the above-recited and other advantages and features of the invention can be obtained, a more particular description of the invention briefly described above will be rendered by reference to specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Figure 1 illustrates an example of a telephonic device that provides a suitable operating environment for the present invention.

Figure 2 illustrates an example of some of the functional components that may facilitate scheduling a meeting.

Figure 3 illustrates an example of some of the functional components that may facilitate managing scheduled meetings.

Figure 4 is a flow diagram illustrating an example of a method for a increasing the level of automation when scheduling a meeting.

Figure 5 is a flow diagram illustrating an example of a method for increasing the level of automation when managing scheduled meetings.

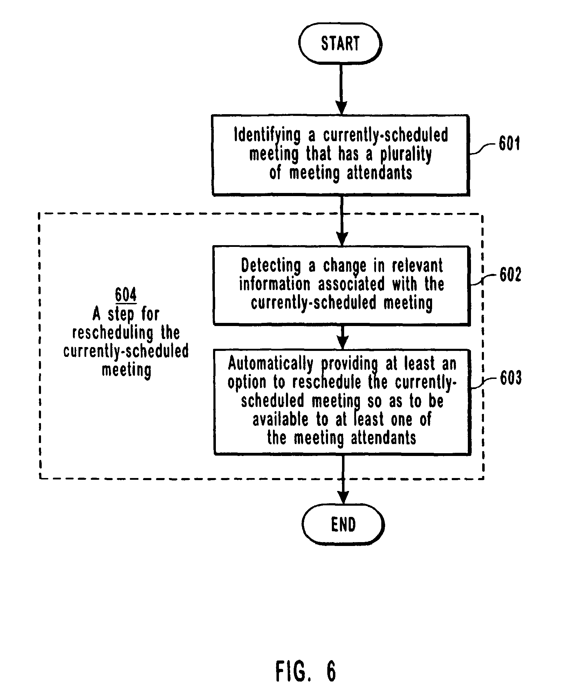

Figure 6 is a flow diagram illustrating an example of a method for rescheduling a currently-scheduled meeting.

### DETAILED DESCRIPTION OF THE PREFERRED EMBODIMENTS

The present invention extends to methods, systems and computer program products for increasing the level of automation when scheduling and managing meetings. Relevant information is accessed from one or more databases that include information such as time availability, location availability, travel conditions, and documents that are associated with meetings and meeting participants. Based on relevant information, meetings may be automatically scheduled or changed and meeting participants may be notified of changes.

When scheduling a meeting, input is received that causes a scheduling computer system to determine that a meeting is to be scheduled among a plurality of meeting attendants. Information relevant to the availability of at least some of the plurality of meeting attendants is accessed. This may include accessing relevant information from calendar, contact, and/or other databases containing information pertinent to the availability of a meeting attendant. At least one potential meeting time is automatically determined based on the relevant information. This determination may include the scheduling computer system utilizing decision logic to determine if relevant information satisfies predetermined criteria.

When managing a meeting, a currently-scheduled meeting that has a plurality of meeting attendants is identified. Information relevant to the currently-scheduled meeting is automatically accessed. This may include accessing information from databases that include calendar data, location data, travel data, documents, or other information relevant to the ability to appropriately conduct the currently-scheduled meeting. Relevant information is automatically provided so as to be available to at least one of the meeting attendants.

The embodiments of the present invention may comprise a general-purpose or special-purpose computer system including various computer hardware components, which are discussed in greater detail below. Embodiments within the scope of the present invention also include computer-readable media for carrying or having computer-executable instructions or data structures stored thereon. Such computer-readable media may be any available media, which is accessible by a general-purpose or special-purpose computer system. By way of example, and not limitation, such computer-readable media can comprise physical storage media such as RAM, ROM, EPROM, CD-ROM or other optical disk storage, magnetic disk storage or other magnetic storage devices, or any other media which can be used to carry or store desired program code means in the form of computer-executable instructions or data structures and which may be accessed by a general-purpose or special-purpose computer system.

In this description and in the following claims, a "network" is defined as any architecture where two or more computer systems may exchange data with each other.

When information is transferred or provided over a network or another communications connection (either hardwired, wireless, or a combination of hardwired or wireless) to a computer system or computer device, the connection is properly viewed as a computer-readable medium. Thus, any such connection is properly termed a computer-readable medium. Combinations of the above should also be included within the scope of computer-readable media. Computer-executable instructions comprise, for example, instructions and data which cause a general-purpose computer system or special-purpose computer system to perform a certain function or group of functions.

In this description and in the following claims, a "computer system" is defined as one or more software modules, one or more hardware modules, or combinations thereof, that work together to perform operations on electronic data. For example, the definition of computer system includes the hardware components of a personal computer, as well as software modules, such as the operating system of the personal computer. The physical layout of the modules is not important. A computer system may include one or more computers coupled via a computer network. Likewise, a computer system may include a single physical device (such as a mobile phone or Personal Digital Assistant "PDA") where internal modules (such as a memory and processor) work together to perform operations on electronic data.

Those skilled in the art will appreciate that the invention may be practiced in network computing environments with many types of computer system configurations, including personal computers, laptop computer, hand-held devices, multi-processor systems, microprocessor-based or programmable consumer electronics, network PCs, minicomputers, mainframe computers, mobile telephones, PDAs, pagers, and the like. The invention may also be practiced in distributed computing environments where local and remote computer systems, which are linked (either by hardwired links, wireless links, or by a combination of hardwired or wireless links) through a communication network, both perform tasks. In a distributed computing environment, program modules may be located in both local and remote memory storage devices.

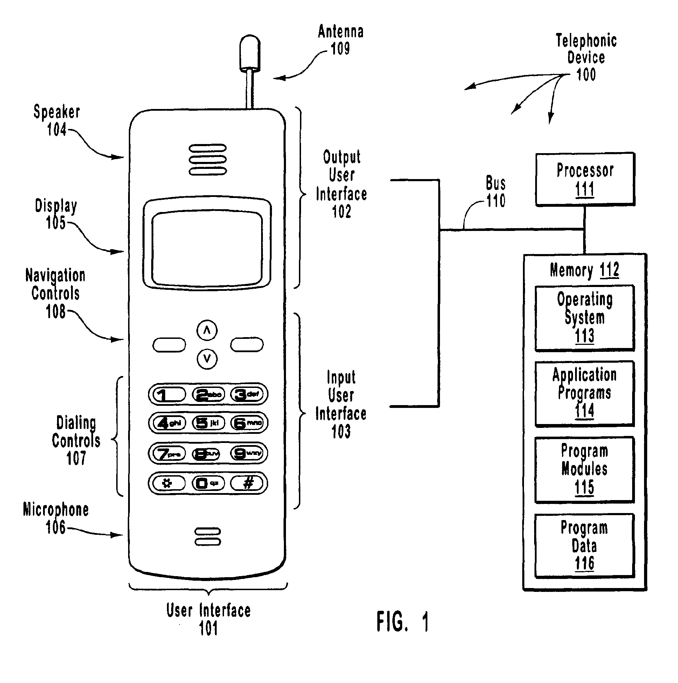

Figure 1 and the following discussion are intended to provide a brief, general description of a suitable computing environment in which the invention may be implemented. Although not required, the invention will be described in the general context of computer-executable instructions, such as program modules, being executed by computer systems. Generally, program modules include routines, programs, objects, components, data structures, and the like, which perform particular tasks or implement particular abstract data types. Computer-executable instructions, associated data structures, and program modules represent examples of the program code means for executing steps of the methods disclosed herein. The particular sequences of such executable instructions or associated data structures represent examples of corresponding acts for implementing the functions described in such steps.

With reference to Figure 1, a suitable operating environment for the principles of the invention includes a general-purpose computer system in the form of a telephonic device 100. The telephonic device 100 includes a user interface 101 for allowing a user to input information through an input user interface 103, and to review information presented via an output user interface 102. For example, the output user interface 102 includes a speaker 104 for presenting audio information to the user, as well as a display 105 for presenting visual information to the user. The telephonic device 100 may also have an antenna 109 if the telephonic device 100 has wireless capabilities.

The input user interface 103 may include a microphone 106 for translating audio information into electronic form. In addition, the input user interface 103 includes dialing controls 107 represented by 12 buttons through which a user may enter information. Input user interface 103 also includes navigation control buttons 108 that assist the user in navigating through various entries and options listed on display 105.

Although user interface 101 has the appearance of a mobile telephone, the unseen features of user interface 101 may allow for complex and flexible general-purpose processing capabilities. For example, telephonic device 100 also includes a processor 111 and a memory 112 that are connected to each other and to the user interface 101 via a bus 110. Memory 112 generally represents a wide variety of volatile and/or non-volatile memories and may include types of memory previously discussed. However, the particular type of memory used in telephonic device 100 is not important to the present invention. Telephonic device 100 may also include mass storage devices (not shown) similar to those associated with other general-purpose computer systems.

Program code means comprising one or more program modules may be stored in memory 112 or other storage devices as previously mentioned. The one or more program modules may include an operating system 113, one or more application programs 114, other program modules 115, and program data 116.

While Figure 1 represents a suitable operating environment for the present invention, the principles of the present invention may be employed in any system that is capable of, with suitable modification if necessary, implementing the principles of the present invention. The environment illustrated in Figure 1 is illustrative only and by no means represents even a small portion of the wide variety of environments in which the principles of the present invention may be implemented.

In this description and in the following claims, a "logical communication path" is defined as any communication path that may enable the transport of electronic data between two entities such as computer systems or modules. The actual physical representation of a communication path between two entities is not important and may change over time. A logical communication path may include portions of a system bus, a local area network, a wide area network, the Internet, combinations thereof, or portions of any other path that may facilitate the transport of electronic data. Logical communication paths may include hardwired links, wireless links, or a combination of hardwired links and wireless links. Logical communication paths may also include software or hardware modules that condition or format portions of data so as to make them accessible to components that implement the principles of the present invention. Such components may include, for example, proxies, routers, firewalls, or gateways. Logical communication paths may also include portions of a Virtual Private Network ("VPN").In this description and in the following claims, "primary scheduling information" is defined as free/busy time for a meeting attendant.

In this description and in the following claims, "supplemental scheduling information" is defined as other information that is relevant to the scheduling of a meeting. Supplemental scheduling information can include, for example, contact information, Global Positioning System ("GPS") data, map data, transit data, meeting attendant priorities, whether a meeting attendant is a required or optional attendant, and data files.

In accordance with the present invention, meeting schedulers, information access modules, information identifier modules, meeting identification modules, and information access modules as well as associated data, including predefined criteria and scheduled meetings databases may be stored and accessed from any of the computer-readable media associated with telephonic device 100. For example, portions of such modules and portions of associated program data may be included in operating system 113, application programs 114, program modules 115 and/or program data 116, for storage in memory 112. Portions of such modules and associated program data may also be stored in any of the mass storage devices previously described. Execution of such modules may be performed in a distributed environment as previously described.

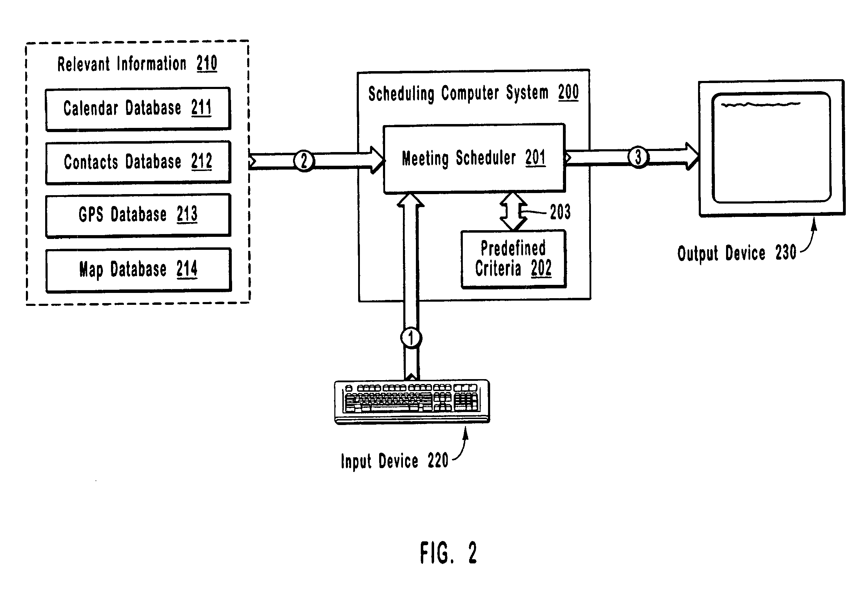

Figure 2 illustrates an example of some of the functional components that may facilitate scheduling a meeting. Shown in Figure 2 is scheduling computer system 200, which may be a general-purpose computer system that includes components similar to those previously discussed herein. Scheduling computer system 200 may include meeting scheduler 201 and predefined criteria 202. Meeting scheduler 201 automatic schedules a meeting by utilizing predefined criteria 202 and analyzing information relevant to the scheduling of a meeting. Meeting scheduler 201 may access and update predefined criteria via logical communication path 203.

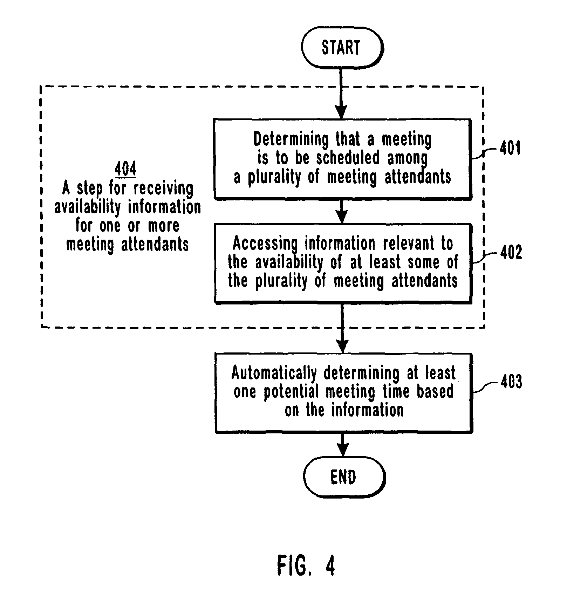

Figure 4 is a flow diagram illustrating an example of a method for increasing the level of automation when scheduling a meeting. The method in Figure 4 will be discussed with reference to the functional components included in Figure 2.

The method in Figure 4 begins with a step for receiving availability information for one or more meeting attendants (step 404). This may include scheduling computer system 200 receiving availability information for potential meeting attendants from databases included in relevant information 210. Relevant information 210 logically represents a store of information that may reside in disparate physical locations and that may be relevant to the scheduling of meetings. The databases included in relevant information 210 may contain information that is relevant to the identification of a potential meeting. Included in relevant information 210 is calendar database 211, which may include time availability data associated with possible meeting attendants. Also included is contacts database 212, which may include personal information associated with possible meeting attendants such as a business or home address, GPS database 213 which may include GPS data such as the current location of a possible meeting participant, and map database 214, which may include mapping data that may be matched to GPS data to indicate a location on a map.

It should be understood that the described databases are merely examples and that the contents of the different databases may include common information. For example, a calendar database and a contacts database may both include time availability data, as well as personal information for possible meeting participants. Further, it would be apparent to one skilled in the art, after having reviewed this description, that a variety of other databases, in addition to those previously described, may be utilized to receive availability information for meeting attendants.

Step 404 may include determining that a meeting is to be scheduled among a plurality of meeting attendants (act 401). Meeting scheduler 201 may receive data indicating that a meeting is to be scheduled (hereinafter also called "indicative data"). Arrow 1 in Figure 2 illustrates that indicative data is received from input device 220, which may be a keyboard configured to input electronic data to a desktop or laptop computer. When scheduling meetings on a mobile computer system, input device 220 may instead be an input user interface similar to input user interface 103 or may be an input user interface of a PDA, pager, or other mobile computer system. Input device 220 may also be a pointing device such as a mouse. It may also be that input device 220 is an audio input device such as a microphone associated with a desktop or laptop computer system or a microphone similar to microphone 106.

In some embodiments, scheduling computer system 200 may receive indicative data from a remote computer system, where the indicative data is transferred to scheduling computer system 200 over a logical communication link. For example, a remote computer system may access scheduling computer system 200 over a network connection and cause indicative data to be received at meeting scheduler 201. Such remote computer systems may be computer systems that contain the information logically represented by relevant information 210.

In other embodiments, scheduling computer system 200 may include decision logic that causes indicative data to be received at meeting scheduler 201. Such decision logic may be included in meeting scheduler 201 or may be in a module external to meeting scheduler 201. In these embodiments, indicative data may be transferred between the internal modules of scheduling computer system 200 over a logical communication path or over a system bus similar to bus 110.

Meeting scheduler 201 may process indicative data to determine that a meeting is to be scheduled among a plurality of meeting attendants.

Step 404 may include accessing information relevant to the availability of at least some of the plurality of meeting attendants (act 402). Arrow 2 in Figure 2 illustrates meeting scheduler 201 may access data from relevant information 210. Accessed data may include, for example, data indicating when an meeting attendant is free and when they are busy ("free/busy time"), the location of an meeting attendant, a priority level for an meeting attendant, and whether or not a meeting attendant is a required or optional attendant.

Based on relevant information, at least one potential meeting is automatically determined (act 403). Relevant information may be analyzed to determine a meeting that appropriately satisfies predetermined criteria. This may include meeting scheduler 201 utilizing decision logic to determine, based on the relevant information, a meeting that appropriately satisfies predetermined criteria 202. Predetermined criteria may include, for example, that a specified percentage of the plurality of meeting attendants be available at a specified time, that all required attendants be available at a specified time, that meeting attendants be available to attend in a specified location, etc. A potential meeting that satisfies predetermined criteria, for example, may be any meeting where at least 90 percent of the meeting attendants are free during the time period over which the potential meeting would be scheduled. It should be understood that these are merely examples of predetermined criteria. It would be apparent to one skilled in the art, after having reviewed this description, that the type and number of predetermined criteria are virtually limitless.

Decision logic in meeting scheduler 201 may also analyze relevant information to determine a potential meeting that satisfies a plurality of different predetermined criteria. For example, a potential meeting that satisfies predetermined criteria may be a meeting where 100 percent of the required meeting attendants are available to meet in a specific location at a specific time. If 100 percent of the meeting attendants are available at the specific time but not the specific location, or vice versa, the predetermined criteria will not be satisfied. Decision logic in meeting scheduler 201 may combine or aggregate different portions or relevant information to generate a value representative of the appropriateness of a potential meeting. Such representative values may be analyzed to determine potential meetings.

If not all predetermined criteria can be satisfied, an appropriate meeting may be a meeting that satisfies an increased number of predetermined criteria. It may be that predetermined criteria designate that 90 percent of meeting attendants be available to attend a meeting at a specific time and in a specific location. A potential meeting where 85 percent are available may be preferred over a potential meeting where 75 percent are available. Additionally, different predefined criteria may be assigned different levels of importance. For example, the percentage of attendants may be important in some situations, while meeting location is important in other situations. The levels of importance for predefined criteria may be configured by setting other predetermined criteria.

It may also be that if not all predetermined criteria can be satisfied, an appropriate meeting may be a meeting that more closely satisfies particular predetermined criteria. When scheduling a two-hour meeting, predetermined criteria may indicate that all potential meeting attendants must attend. An appropriate meeting may result where some meeting attendants are only available for a portion of the two-hour meeting. A level of strictness with which relevant information must satisfy certain predetermined criteria may be configured by setting other predetermined criteria.

In one example embodiment, a plurality of potential meetings may be automatically determined. The meetings may be ranked in a recommended order based on the strictness with which the meetings satisfy predetermined criteria and/or the levels of importance for specific predetermined criteria. Meetings that satisfy predetermined criteria more strictly or that satisfy predetermined criteria with higher levels of importance may be ranked higher. Likewise, meetings that satisfy predetermined criteria less strictly or that satisfy predetermined criteria with lower levels of importance may be ranked lower.

Predetermined criteria may be user-configurable through a user interface or may be automatically configured by scheduling computer system 200.

After determining at least one potential meeting time, the scheduling computer system may present a list of meetings to an output device. Arrow 3 in Figure 2 illustrates that a list of meetings is transferred to output device 230, which may be a computer monitor or laptop display device. A list of meetings may be output in a recommended order where higher ranked meetings are output before lower ranked meetings or where higher ranked meetings are included before lower ranked meetings in the list. When scheduling meetings on a mobile computer system, output device 230 may instead be a display similar to display 105 or may be the display of a PDA, pager, or other mobile computer system. Output device 230 may also be an audio output device such as a speaker associated with a desktop or laptop computer system or a speaker similar to speaker 104.

In some embodiments, a meeting organizer may select a meeting from the list of at least one meeting. Relevant information associated with the selected meeting, such as date, time, and location may be sent to meeting attendants. In other embodiments, the list of at least one meeting is sent to meeting attendants. From the list, each meeting attendant may vote for the most desirable meeting. The selected meeting may be the meeting that receives the most votes. Additional meeting attendants may be invited to currently-scheduled meetings. When this occurs, an additional meeting attendant may be sent relevant information associated with the currently-scheduled meeting.

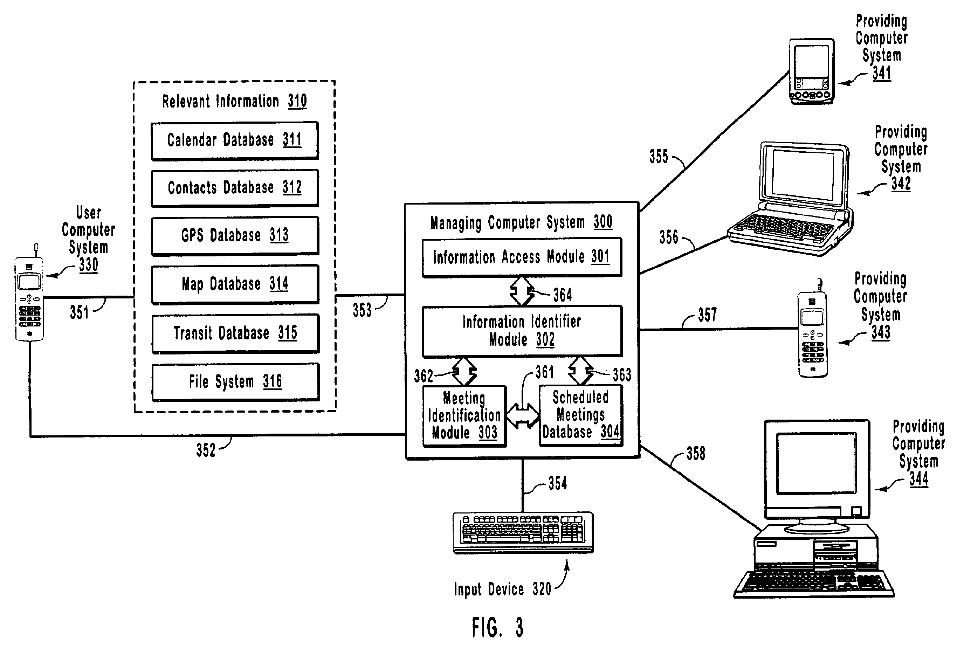

Figure 3 illustrates an example of some of the functional components that may facilitate managing a meeting. Shown in Figure 3 is managing computer system 300, which may be a general-purpose computer system that includes components similar to those previously discussed herein. Managing computer system 300 may provide complex and flexible general-purpose processing capabilities. Managing computer system 300 includes meeting identification module 303, which may identify information as being associated with a currently-scheduled meeting. Meeting identification module 303 may refer to scheduled meetings database 304, which includes at least a list of currently scheduled-meetings, when making such an identification. Managing computer system 300 also includes information identifier module 302, which may identify information that is relevant to a currently-scheduled meeting, and information access module 301, which may access information that is relevant to a currently-scheduled meeting. The modules and databases included in managing computer system 300 may communicate via logical communication paths 361-364.

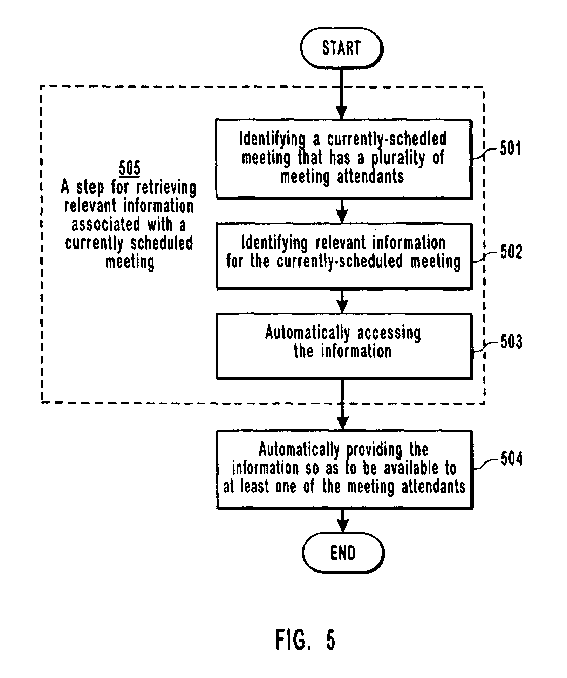

Figure 5 is a flow diagram illustrating an example of a method for increasing the level of automation when managing scheduled meetings. The method in Figure 5 will be discussed with reference to the functional components included in Figure 3.

The method in Figure 5 may begin with a step for retrieving relevant information associated with a currently-scheduled meeting (step 505). This may include managing computer system 300 retrieving relevant information from relevant information 310. Relevant information 310 logically represents a store of information that may reside in disparate physical locations and that may be relevant to the management of scheduled meetings. The databases included in relevant information 310 contain information that may be relevant to managing a currently-scheduled meeting. Relevant information 310 may include information similar to that included in relevant information 210. Relevant information 310 may also include other information related to the management of currently-scheduled meetings, such as transit data contained in transit database 315 and data files contained in file system 316. Transit database 315 may include data on traffic congestion, road construction, or other data related to traveling in an area under the jurisdiction of a transit authority. File system 316 may include data files that are associated with a currently-scheduled meeting, such as word processing documents or graphical presentations. Managing computer system 300 may retrieve data from relevant information 310 via logical communication path 353.

Managing computer system 300 may also retrieve relevant information from user computer system 330. This may occur if a user associated with user computer system 300 changes information that is relevant to a currently-scheduled meeting. For example, if a user of user computer system 300 changes his or her availability for a currently-scheduled meeting or modifies a file associated with a currently-scheduled meeting, this may be retrieved by managing computer system 300. Managing computer system 300 may retrieve data from user computer system 330 via logical communication path 352.

Step 505 may include identifying a currently-scheduled meeting that has a plurality of meeting attendants (act 501). When managing computer system 300 receives data, meeting identification module 303 may determine that the data is meeting management data. Meeting identification module 303 may refer to scheduled meeting database 304 to further determine if the meeting management data is associated with a currently-scheduled meeting.

Meeting management data may be received from relevant information 310, user computer system 352, or managing computer system 300. Meeting management data may include data associated with a meeting attendant, meeting location, or subject matter of a meeting. In some embodiments, meeting management data may be updated at a remote computer system. For example, an individual may update their time availability on user computer system 330. Meeting management data representative of the updated time availability may be received at meeting identification module 303. Meeting identification module 303 may refer to scheduled meetings database 304 to determine if the meeting management data is associated with a meeting attendant and if the change in time availability affects any currently-scheduled meetings. A currently-scheduled meeting may be affected, for example, if a required meeting attendant is no longer available to attend. If a currently-scheduled meeting is affected, meeting identification module 303 may determine that meeting management data is associated with a currently-scheduled meeting and thus identify the currently-scheduled meeting.

In some embodiments, relevant information 310 may be updated and the update, in the form of meeting management data, is received at meeting identification module 303. For example, a document included in file system 316 may be edited and saved. Meeting management data associated with the document being edited may be received at meeting identification module 303. Meeting identification module 303 may refer to scheduled meetings database 304 to determine if document is associated with any currently-scheduled meetings. If the document is associated with a currently-scheduled meeting, meeting identification module 303 may identify the currently-scheduled meeting. Relevant information 310 may be updated in response to events associated with user computer system 330. For example, if user computer system 330 contains a GPS transmitter, GPS database 213 may be updated as user computer system 330 moves between physical locations.

When determining if meeting management data is associated with a currently-scheduled meeting, identification module 303 may refer to databases included in relevant information 310. It may be that meeting management data associated with a change in the location of an individual is received at meeting identification module 303. Meeting identification module 303 may refer to scheduled meetings database 304, as well as map database 314 and transit database 315, to determine if the meeting management data affects any currently-scheduled meetings. A meeting may be affected, for example, if an individual is a meeting attendant and severe traffic congestion is being experienced at the individual's current location.

In some embodiments, meeting identification module 303 may receive meeting management data from input device 320.

Step 505 may include identifying relevant information for the currently-scheduled meeting (act 502). Identifying relevant information may include identifying data included in user computer system 330, relevant information 310, or managing computer system 300. After a currently-scheduled meeting is identified, meeting identification module 303 may transfer the identification to information identifier module 302. Information identifier module 302 may identify the information that is relevant to the identified currently-scheduled meeting. This may include identifying addresses and/or pointers to relevant information. A pointer may designate a location in the system memory of a computer system or a location on a mass storage device associated with a computer system. An address may be an electronic messaging addresses associated with meeting attendants that desire to receive the relevant information.

Information identifier module 302 may identify relevant information that is associated with the meeting management data that caused a currently-scheduled meeting to be identified. It may be that a currently-scheduled meeting was identified due to receiving meeting management data associated with edits being performed in a relevant document. As a result, information identifier module 302 may identify other documents that link to the relevant document or that include embedded data from the relevant document. Information identifier module 302 may refer to scheduled meetings database to determine the relationships between meeting management data and other relevant information. Likewise, reference may be made to the databases included in relevant information 310 and/or modules included in user computer system 330 to determine relationships between meeting management data and other relevant information. For example, when a GPS transmitter included in user computer system 330 is detected in a specified location it may be desirable to also identify an associated map.

Step 505 may include automatically accessing the information (act 503). Information access module 301 may automatically access relevant information by utilizing addresses and/or pointers that were identified by information identifier module 302. This may include accessing information from user computer system 330, relevant information 310, and/or scheduled meetings database 304.

The information may be automatically provided so as to be available to at least one of the meeting attendants (act 504). Relevant information may be transferred in the form of electronic messages to computer systems that are associated with meeting attendants. For example, providing computer systems 341-344 may each be associated with meeting attendants of a currently scheduled meeting. Relevant information may be provided over logical communication paths 355-358 to one or more of the providing computer systems 341-344. When providing relevant information, previously identified electronic messaging addresses may be utilized.

In some cases, different providing computer systems are provided with different relevant information. Managing computer system 300 may determine which providing computer systems are to receive which relevant information. Managing computer system 300 and/or a providing computer system may be configured to filter out specified relevant information so the specified relevant information is not provided to the providing computer system. For example, a meeting attendant associated with providing computer system 341 may desire to receive availability information for required meeting attendants but not for optional meeting attendants. When the availability of an optional meeting attendant is updated, managing computer system 300 will not provide relevant information about the optional meeting attendant to providing computer system 341.

An administrative entity may control specified relevant information that is filtered out for a meeting attendant. An administrative entity may filter specified relevant information when it is not desirable for a meeting attendant to be provided with the specified relevant information. For example, a sales agent meeting with a client may be provided with updated information about the client from the sales agent's corporate database, however the updated information is not provided to the client.

After identifying a currently-scheduled meeting that has a plurality of meeting attendants (act 601), managing computer system 300 may perform a step for rescheduling a currently-scheduled meeting (step 604). Managing computer system 300 may monitor relevant information, such as, for example, meeting management data, associated with a currently-scheduled meeting. Step 604 may include an act of managing computer system 300 detecting a change in relevant information associated with the currently-scheduled meeting (act 602). Managing computer system 300 may detect that a portion of meeting management data, such as, for example, the availability of a meeting participant or of the location where the currently-schedule meeting is to occur, has been updated.

Step 604 may include an act of managing computer system 300 automatically providing at least an option to reschedule the currently-scheduled meeting so as to be available to at least one of the meeting attendants (act 603). Managing computer system 300 may be configured to suggest one or more possible options for rescheduling the currently-scheduling meeting, such as, for example, scheduling the currently-scheduled meeting at a different time and/or in a different location. Managing computer system 300 may transfer the possible options to computer systems that are associated with the meeting attendants. A meeting attendant may select one of the possible options to attempt to reschedule the currently-scheduled meeting. In some cases, meeting attendants with higher priority or that are required attendants may receive possible options, while attendants with lower priority or that are optional do not receive possible options. Managing computer 300 may be configured to automatically reschedule the currently-scheduled meeting without input from any meeting attendants. Managing computer 300 may follow the method of Figure 4 when automatically rescheduling a meeting or rescheduling a meeting after receiving meeting attendant input.

Increasing the level of automation when scheduling managing meetings reduces the amount of data that is interpreted by individual meeting organizers and meeting attendants. This promotes efficient scheduling of meetings and reduces the chance of human error in the scheduling process. Automatically accessing and providing relevant information to meeting attendants centralizes the distribution of such information. This promotes time efficiency by relieving individual meeting attendants from having to actively seek out the information. In a mobile environment, increased automation may provide certain safety benefits as well. For example, automatically updating the status of a meeting attendant who is late due to traffic congestion may free the meeting attendant from having to manually manipulate a mobile computer system. Thus, the meeting attendant may devote more attention to safe operation of their vehicle.

The described embodiments are to be considered in all respects only as illustrative and not restrictive. The scope of the invention is, therefore, indicated by the appended claims rather than by the foregoing description.

## Claims

1. A mobile communication system for scheduling and managing meetings in a distributed network computing environment, so as to relieve a user from having to manually record and interpret availability data for meeting attendants, the mobile communication system comprising:
a plurality of remote hand-held computing devices (100) comprising a first remote hand-held computing device comprising a global positioning system transmitter for updating the location of a respective potential meeting attendant in a global positioning system database (213) storing locations of potential meeting attendants, and a second remote hand-held computing device for transmitting a request for scheduling a meeting among a plurality of meeting attendants to a scheduling computer system (200), and
the scheduling computer system (200) for receiving the request from the second remote hand-held computing device (100), the scheduling computer system (200) comprising a meeting scheduler (201) for processing the request to determine that a meeting is to be scheduled among the plurality of meeting attendants,
wherein the scheduling computer system (200) is adapted to automatically access the global positioning system database (213) to obtain global positioning system data of remote hand-held devices to locate meeting attendants and to access supplemental scheduling information (210) relevant to at least some of the plurality of meeting attendants from one or more computer applications or databases, wherein the supplemental scheduling information comprises at least the priority level of respective meeting attendants and
wherein the meeting scheduler (201) comprises a decision logic for automatically determining at least one potential meeting that can satisfy predetermined criteria (202) by analyzing the global positioning system data and the supplemental scheduling information (210) comprising at least the priority level of respective meeting attendants.

2. The mobile communication system according to claim 1, wherein the request indicating that a meeting is to scheduled is received through a network connectable to the scheduling computer system (200).

3. The mobile communication system according to claim 1 or 2, wherein the scheduling computer system (200) is adapted to access primary information for at least some of the plurality of meeting attendants along with supplemental information (210) for at least some of the plurality of meeting attendants when automatically accessing supplemental information (210) relevant to at least some of the plurality of meeting attendants.

4. The mobile communication system according to one of claims 1 to 3, wherein the scheduling computer system (200) is adapted to access data files that are relevant to at least some of the meeting attendants when automatically accessing supplemental information (210) relevant to at least some of the some of the plurality of meeting attendants.

5. The mobile communication system according to one of claims 1 to 4, wherein the scheduling computer system (200) is adapted to automatically determine rankings for a plurality of potential meetings when automatically determining at least one potential meeting.

6. The mobile communication system according to claim 5, wherein the scheduling computer system (200) is adapted to automatically determine rankings for a plurality of potential meetings based on the strictness with which the meetings satisfy predetermined criteria (202).

7. The mobile communication system according to claim 5, wherein the scheduling computer system (200) is adapted to automatically determine rankings for a plurality of potential meetings based on the level of the predetermined criteria (202) that are satisfied.

8. The mobile communication system according to one of claims 1 to 7, wherein the scheduling computer system (200) is adapted to present the at least one potential meeting at an output device (230).

9. The mobile communication system according to one of claims 1 to 8, wherein the predetermined criteria (202) includes a percentage of attendants that must be available to attend the meeting at a particular location.

10. The mobile communication system according to one of claims 1 to 9, wherein one or more databases include at least one of a calendar database (211), a contacts database (212), and a map database (214).

11. The mobile communication system according to one of claims 1 to 10, further comprising:
a managing computer system (300) for identifying and automatically accessing relevant information (310) for the currently-scheduled meeting, wherein the managing computer system (200) is further adapted to automatically provide the relevant information (310) so as to be available to at least one of the meeting attendants.

12. The mobile communication system according to claim 11, wherein the managing computer system (300) comprises a meeting identification module (303) for receiving meeting management data associated with a currently-scheduled meeting when identifying a currently-scheduled meeting that has a plurality of meeting attendants.

13. The mobile communication system according to claim 12, wherein the meeting management data is associated with change in the availability of a meeting attendant.

14. The mobile communication system according to claim 12, wherein the meeting management data is associated with a change in the availability of a location.

15. The mobile communication system according to claim 12, wherein the meeting management data is associated with a change in a document.

16. The mobile communication system according to one of claims 11 to 14, wherein the mobile communication system comprises a scheduled meeting database (304) and the management computer system (300) is adapted to refer to the scheduled meetings database (304) when identifying a currently-scheduled meeting.

17. The mobile communication system according to one of claims 11 to 16, wherein the management computer system (300) is adapted to identify addresses associated with the relevant information (310).

18. The mobile communication system according to one of claim 17, wherein the identified addresses associated with the relevant information (310) are electronic messaging addresses associated with meeting attendants that are to attend the currently-scheduled meeting.

19. The mobile communication system according to one of claims 11 to 18, wherein the managing computer system (300) is adapted to identify relevant information (310) contained in at least one remote computer system that is network connectable to the managing computer system (300) when identifying relevant information (310) for the currently-scheduled meeting.

20. The mobile communication system according to one of claims 11 to 19, wherein the managing computer system (300) is adapted to automatically access information contained in at least one remote computer system that is network connectable to the managing computer system (300).

21. The mobile communication system according to one of claims 11 to 20, wherein the managing computer system (300) is adapted to automatically providing the information so as to be available to at least one of the meeting attendants by means of an electronic message that includes at least a portion of the information.

22. The mobile communication system according to claim 21, wherein the managing computer system (300) is adapted to Automatically provide the electronic message to an electronic message address associated with at least one of the meeting attendants.

23. The mobile communication system according to one of claims 11 to 22, wherein the relevant information (310) for the currently-scheduled meeting includes at least one of an estimated time of arrival of an attendant, a current location of an attendant, contact information of an attendant, documents related to the meeting.

24. The mobile communication system according to one of claim 11 to 23, wherein the managing computer system (300) is adapted to access the relevant information (310) from one or more data bases that include at least one of a calendar database (211, 311), a contacts database (212, 312), a GPS database (213, 313), a map database (214, 314) and a transit database (315).

## Patentansprüche

1. Mobiles Kommunikationssystem zur Planung und Verwaltung von Besprechungen in einer verteilten Netzwerkumgebung zur elektronischen Datenverarbeitung, um einen Benutzer der Notwendigkeit zu entheben, Verfügbarkeitsdaten der Besprechungsteilnehmer manuell aufzuzeichnen und zu interpretieren, wobei das mobile Kommunikationssystem umfasst:
eine Vielzahl entlegener tragbarer Geräte zur elektronischen Datenverarbeitung (100), umfassend ein erstes entlegenes tragbares Gerät zur elektronischen Datenübertragung mit einem Sender eines globalen Positionsbestimmungssystems (GPS) zur Aktualisierung des Aufenthaltsorts eines entsprechenden potenziellen Besprechungsteilnehmers in einer GPS-Datenbank (213), die Aufenthaltsorte der potenziellen Besprechungsteilnehmer speichert, und ein zweites entlegenes tragbares Gerät zur elektronischen Datenübertragung zur Übertragung einer Anforderung für die Planung einer Besprechung unter einer Vielzahl von Besprechungsteilnehmern an ein Planungscomputersystem (200) und
das Planungscomputersystem (200), um die Anforderung von dem zweiten entlegenen tragbaren Gerät zur elektronischen Datenverarbeitung (100) zu empfangen, wobei das Planungscomputersystem (200) einen Besprechungsplaner (201) für die Verarbeitung der Anforderung umfasst, um festzustellen, dass eine Besprechung unter der Vielzahl der Besprechungsteilnehmer zu planen ist,
wobei das Planungscomputersystem (200) eingerichtet ist, um automatisch auf die GPS-Datenbank (213) zuzugreifen, um GPS-Daten eines entfernten tragbaren Gerätes zu erhalten, um Besprechungsteilnehmer zu orten, und um auf zusätzliche Planungsinformationen (210), die für zumindest einige der Vielzahl der Besprechungsteilnehmer relevant sind, von einer oder mehrerer Computeranwendungen oder Datenbanken zuzugreifen, wobei die zusätzlichen Planungsinformationen zumindest den Prioritätsgrad der jeweiligen Besprechungsteilnehmer umfasst und
wobei der Besprechungsplaner (201) eine Entscheidungslogik umfasst, um zumindest eine potenzielle Besprechung automatisch zu bestimmen, die vorbestimmte Kriterien (202) erfüllen kann, indem sie die GPS-Daten und die zusätzlichen Planungsinformationen (210), die zumindest den Prioritätsgrad der jeweiligen Besprechungsteilnehmer umfassen, analysiert.

2. Mobiles Kommunikationssystem nach Anspruch 1, wobei die Anforderung, die anzeigt, dass eine Besprechung zu planen ist, über ein Netzwerk empfangen wird, das an das Planungscomputersystem (200) anschließbar ist.

3. Mobiles Kommunikationssystem nach Anspruch 1 oder 2, wobei das Planungscomputersystem (200) eingerichtet ist, um auf primäre Informationen für zumindest einige der Vielzahl der Besprechungsteilnehmer zusammen mit zusätzlichen Informationen (210) für zumindest einige der Vielzahl der Besprechungsteilnehmer zuzugreifen, wenn automatisch auf zusätzliche Informationen (210) zugegriffen wird, die für zumindest einige der Vielzahl der Besprechungsteilnehmer relevant sind.

4. Mobiles Kommunikationssystem nach einem der Ansprüche 1 bis 3, wobei das Planungscomputersystem (200) eingerichtet ist, um auf Datendateien zuzugreifen, die für zumindest einige der Besprechungsteilnehmer relevant sind, wenn automatisch auf zusätzliche Informationen (210) zugegriffen wird, die für zumindest einige der Vielzahl der Besprechungsteilnehmer relevant sind.

5. Mobiles Kommunikationssystem nach einem der Ansprüche 1 bis 4, wobei das Planungscomputersystem (200) eingerichtet ist, um automatisch eine Rangordnung für eine Vielzahl potenzieller Besprechungen festzulegen, wenn zumindest eine potenzielle Besprechung automatisch bestimmt wird.

6. Mobiles Kommunikationssystem nach Anspruch 5, wobei das Planungscomputersystem (200) eingerichtet ist, um automatisch eine Rangordnung für eine Vielzahl von potenziellen Besprechungen auf Basis der Striktheit, mit der die Besprechung vorbestimmte Kriterien (202) erfüllen, festlegt.

7. Mobiles Kommunikationssystem nach Anspruch 5, wobei das Planungscomputersystem (200) eingerichtet ist, um automatisch eine Rangordnung für eine Vielzahl von potenziellen Besprechungen auf Basis des Grades der vorbestimmten Kriterien (202), die erfüllt sind, festlegt.

8. Mobiles Kommunikationssystem nach einem der Ansprüche 1 bis 7, wobei das Planungscomputersystem (200) eingerichtet ist, um die zumindest eine potenzielle Besprechung an einem Ausgabegerät (230) zu präsentieren.

9. Mobiles Kommunikationssystem nach einem der Ansprüche 1 bis 8, wobei die vorbestimmten Kriterien (202) einen Prozentsatz der Teilnehmer beinhalten, die für die Teilnahme an der Besprechung an einem bestimmten Ort verfügbar sein müssen.

10. Mobiles Kommunikationssystem nach einem der Ansprüche 1 bis 9, wobei eine oder mehrere Datenbanken zumindest eine Kalenderdatenbank (211), eine Kontaktdatenbank (212) und eine Kartendatenbank (214) beinhalten.

11. Mobiles Kommunikationssystem nach einem der Ansprüche 1 bis 10, des Weiteren umfassend:
ein Verwaltungscomputersystem (300) zur Identifizierung und zum automatischen Zugriff auf relevante Informationen (310) für die gegenwärtig geplante Besprechung, wobei das Verwaltungscomputersystem (200) des Weiteren eingerichtet ist, um automatisch die relevanten Informationen (310) zur Verfügung zu stellen, so dass sie für zumindest einen der Besprechungsteilnehmer verfügbar sind.

12. Mobiles Kommunikationssystem nach Anspruch 11, wobei das Verwaltungscomputersystem (300) ein Besprechungsidentifikationsmodul (303) umfasst, um Besprechungsverwaltungsdaten zu empfangen, die mit einer gegenwärtig geplanten Besprechung assoziiert sind, wenn eine gegenwärtig geplante Besprechung identifiziert wird, die eine Vielzahl von Besprechungsteilnehmern hat.

13. Mobiles Kommunikationssystem nach Anspruch 12, wobei die Besprechungsverwaltungsdaten mit einer Änderung in der Verfügbarkeit eines Besprechungsteilnehmers assoziiert sind.

14. Mobiles Kommunikationssystem nach Anspruch 12, wobei die Besprechungsverwaltungsdaten mit einer Änderung in der Verfügbarkeit eines Ortes verbunden sind.

15. Mobiles Kommunikationssystem nach Anspruch 12, wobei die Besprechungsverwaltungsdaten mit einer Änderung in einem Dokument assoziiert sind.

16. Mobiles Kommunikationssystem nach einem der Ansprüche 11 bis 14, wobei das mobile Kommunikationssystem eine Datenbank für geplante Besprechungen (304) umfasst und das Verwaltungscomputersystem (300) eingerichtet ist, um auf die Datenbank für geplante Besprechungen (304) Bezug zu nehmen, wenn eine gegenwärtig geplante Besprechung identifiziert wird.

17. Mobiles Kommunikationssystem nach einem der Ansprüche 11 bis 16, wobei das Verwaltungscomputersystem (300) eingerichtet ist, um Adressen zu identifizieren, die mit den relevanten Informationen (310) verbunden sind.

18. Mobiles Kommunikationssystem nach Anspruch 17, wobei die identifizierten Adressen, die mit den relevanten Informationen (310) assoziiert sind, Adressen für elektronische Nachrichten sind, die mit Besprechungsteilnehmern assozüert sind, die an der gegenwärtig geplanten Besprechung teilnehmen sollen.

19. Mobiles Kommunikationssystem nach einem der Ansprüche 11 bis 18, wobei das Verwaltungscomputersystem (300) eingerichtet ist, um relevante Informationen (310) zu identifizieren, die in zumindest einem entfernten Computersystem enthalten sind, das über ein Netzwerk mit dem Verwaltungscomputersystem (300) verbindbar ist, wenn relevante Informationen (310) für die gegenwärtig geplante Besprechung identifiziert werden.

20. Mobiles Kommunikationssystem nach einem der Ansprüche 11 bis 19, wobei das Verwaltungscomputersystem (300) eingerichtet ist, um automatisch auf Informationen zuzugreifen, die in zumindest einem entfernten Computersystem enthalten sind, das über ein Netzwerk mit dem Verwaltungscomputersystem (300) verbindbar ist.

21. Mobiles Kommunikationssystem nach einem der Ansprüche 11 bis 20, wobei das Verwaltungscomputersystem (300) eingerichtet ist, um automatisch die Informationen zur Verfügung zu stellen, so dass sie für zumindest einen der Besprechungsteilnehmer mittels einer elektronischen Nachricht, die zumindest einen Teil der Informationen enthält, verfügbar sind.

22. Mobiles Kommunikationssystem nach Anspruch 21, wobei das Verwaltungscomputersystem (300) eingerichtet ist, um automatisch die elektronische Nachricht an eine Adresse für elektronischen Nachrichten, die mit mindestens einem der Besprechungsteilnehmer verbunden ist, zu schicken.

23. Mobiles Kommunikationssystem nach einem der Ansprüche 11 bis 22, wobei die relevanten Informationen (310) für die gegenwärtig geplante Besprechung zumindest eine geschätzte Ankunftszeit eines Teilnehmers, eine gegenwärtige Position eines Teilnehmers, Kontaktinformationen eines Teilnehmers, oder die Besprechung betreffende Dokumente beinhaltet.

24. Mobiles Kommunikationssystem nach einem der Ansprüche 11 bis 23, wobei das Verwaltungscomputersystem (300) eingerichtet ist, um auf die relevanten Informationen (310) von einer oder mehreren Datenbanken, die zumindest eine Kalenderdatenbank (211, 311), eine Kontaktdatenbank (212, 312), eine GPS-Datenbank (213, 313), eine Kartendatenbank (214, 314) oder eine Transitdatenbank (315) beinhaltet, zuzugreifen.

## Revendications

1. Système de communication mobile pour planifier et gérer des réunions dans un environnement informatique en réseau décentralisé, afin d'éviter à un utilisateur d'avoir à enregistrer manuellement et à interpréter des données de disponibilité concernant des participants aux réunions, le système de communication mobile comprenant:
une pluralité de dispositifs informatiques portables distants (100) qui comprennent un premier dispositif informatique portable distant comportant un émetteur de système de positionnement mondial (GPS) pour actualiser le lieu de chaque participant potentiel à une réunion dans une base de données de système de positionnement mondial (213) stockant des lieux de participants potentiels à des réunions, et un second dispositif informatique portable distant destiné à transmettre à un système informatique de planification (200) une demande de planification d'une réunion entre une pluralité de participants á la réunion, et
le système informatique de planification (200) destiné à recevoir la demande du second dispositif informatique portable distant (100), système informatique de planification (200) comprenant un planificateur de réunions (201) destiné à traiter la demande pour déterminer qu'une réunion doit être planifiée entre la pluralité de participants á la réunion,
dans lequel le système informatique de planification (200) est adapté pour accéder automatiquement à la base de données de système de positionnement mondial (213) pour obtenir des données de système de positionnement mondial de dispositifs portables distants afin de localiser les participants á la réunion, et accéder à des informations de planification additionnelles (210) relatives à certains au moins de la pluralité de participants à la réunion à partir d'une ou de plusieurs applications informatiques ou bases de données, les informations de planification additionnelles comprenant au moins le niveau de priorité des participants à la réunion respectifs, et
dans lequel le planificateur de réunions (201) comprend une logique de décision pour déterminer automatiquement au moins une réunion potentielle pouvant satisfaire des critères prédéterminés (202), en analysant les données de système de positionnement mondial et les informations de planification additionnelles (210) comprenant au moins le niveau de priorité des respectifs participants à la réunion.

2. Système de communication mobile selon la revendication 1, dans lequel la demande indiquant qu'une réunion doit être planifiée est reçue par l'intermédiaire d'un réseau pouvant être connecté au système informatique de planification (200).

3. Système de communication mobile selon la revendication 1 ou 2, dans lequel le système informatique de planification (200) est adapté pour accéder à des informations principales concernant certains au moins de la pluralité participants à la réunion en même temps qu'aux informations additionnelles (210) concernant certains au moins de la pluralité de participants à la réunion, lorsqu'il accède automatiquement aux informations additionnelles (210) relatives à certains au moins de la pluralité de participants à la réunion.

4. Système de communication mobile selon l'une des revendications 1 à 3, dans lequel le système informatique de planification (200) est adapté pour accéder à des fichiers de données relatifs à certains au moins des participants à la réunion, lorsqu'il accède automatiquement aux informations additionnelles (210) relatives à certains au moins de la pluralité de participants à la réunion.

5. Système de communication mobile selon l'une des revendications 1 à 4, dans lequel le système informatique de planification (200) est adapté pour déterminer automatiquement des classements pour une pluralité de réunions potentielles, lorsqu'il détermine automatiquement au moins une réunion potentielle.

6. Système de communication mobile selon la revendication 5, dans lequel le système informatique de planification (200) est adapté pour déterminer automatiquement des classements pour de multiples réunions potentielles en fonction de la rigueur avec laquelle les réunions satisfont des critères prédéterminés (202).

7. Système de communication mobile selon la revendication 5, dans lequel le système informatique de planification (200) est adapté pour déterminer automatiquement des classements pour une pluralité de réunions potentielles en fonction du niveau des critères prédéterminés (202) qui sont satisfaits.

8. Système de communication mobile selon l'une des revendications 1 à 7, dans lequel le système informatique de planification (200) est adapté pour présenter la ou les réunions potentielles au niveau d'un dispositif de sortie (230).

9. Système de communication mobile selon l'une des revendications 1 à 8, dans lequel les critères prédéterminés (202) comprennent un pourcentage de participants qui doivent être disponibles pour participer à la réunion dans un lieu particulier.

10. Système de communication mobile selon l'une des revendications 1 à 9, dans lequel une ou plusieurs bases de données comprennent l'une au moins d'une base de données calendaires (211), une base de données de contacts (212) et une base de données cartographiques (214).

11. Système de communication mobile selon l'une des revendications 1 à 10, comprenant également:
un système informatique de gestion (300) destiné à identifier des informations pertinentes (310) pour la réunion en cours de planification et à accéder automatiquement à ces informations, le système informatique de gestion (300) étant également adapté pour fournir automatiquement les informations pertinentes (310) afin qu'elles soient accessibles à l'un au moins des participants à la réunion.

12. Système de communication mobile selon la revendication 11, dans lequel le système informatique de gestion (300) comprend un module d'identification de réunion (303) destiné à recevoir des données de gestion de réunion associées à une réunion en cours de planification, lorsqu'il identifie une réunion en cours de planification qui comporte une pluralité de participants.

13. Système de communication mobile selon la revendication 12, dans lequel les données de gestion de réunion sont associées à un changement de disponibilité d'un participant à la réunion.

14. Système de communication mobile selon la revendication 12, dans lequel les données de gestion de réunion sont associées à un changement de disponibilité d'un lieu.

15. Système de communication mobile selon la revendication 12, dans lequel les données de gestion de réunion sont associées à un changement dans un document.

16. Système de communication mobile selon l'une des revendications 11 à 14, dans lequel le système de communication mobile comprend une base de données de réunions planifiées (304), le système informatique de gestion (300) étant adapté pour se référer à la base de données de réunions planifiées (304), lorsqu'il identifie une réunion en cours de planification.

17. Système de communication mobile selon l'une des revendications 11 à 16, dans lequel le système informatique de gestion (300) est adapté pour identifier des adresses associées aux informations pertinentes (310).

18. Système de communication mobile selon la revendication 17, dans lequel les adresses identifiées associées aux informations pertinentes (310) sont des adresses de messagerie électronique associées aux participants à la réunion qui doivent participer à la réunion en cours de planification.

19. Système de communication mobile selon l'une des revendications 11 à 18, dans lequel le système informatique de gestion (300) est adapté pour identifier des informations pertinentes (310) contenues dans au moins un système informatique distant apte à être connecté à lui par réseau, lorsqu'il identifie des informations pertinentes (310) pour la réunion en cours de planification.

20. Système de communication mobile selon l'une des revendications 11 à 19, dans lequel le système informatique de gestion (300) est adapté pour accéder automatiquement à des informations contenues dans au moins un système informatique distant apte à être connecté à lui par réseau.

21. Système de communication mobile selon l'une des revendications 11 à 20, dans lequel le système informatique de gestion (300) est adapté pour fournir automatiquement les informations afin qu'elles soient accessibles à l'un au moins des participants à la réunion, au moyen d'un message électronique qui contient au moins une partie des informations.

22. Système de communication mobile selon la revendication 21, dans lequel le système informatique de gestion (300) est adapté pour fournir automatiquement le message électronique à une adresse de message électronique associée à l'un au moins des participants à la réunion.

23. Système de communication mobile selon l'une des revendications 11 à 22, dans lequel les informations pertinentes (310) pour la réunion en cours de planification comprennent l'un au moins d'une heure d'arrivée estimative d'un participant, d'un lieu actuel d'un participant, d'informations pour contacter un participant et de documents relatifs à la réunion.

24. Système de communication mobile selon l'une des revendications 11 à 23, dans lequel le système informatique de gestion (300) est adapté pour accéder aux informations pertinentes (310) à partir d'une ou de plusieurs bases de données qui comprennent l'une au moins d'une base de données calendaires (211, 311), d'une base de données de contacts (212, 312), d'une base de données GPS (213, 313), d'une base de données cartographiques (214, 314) et d'une base de données de transit (315).
